# EUROPÄISCHE PATENTANMELDUNG

(11) **EP 2 918 159 A1**
(43) Veröffentlichungstag der Anmeldung: **16.09.2015**
(21) Anmeldenummer: 15154985.4
(22) Anmeldetag: 13.02.2015
(51) Int. Cl.: A01D 41/127

(54) **Anordnung und Verfahren zur Erkennung und Dokumentation von Strohqualität**

(30) Priorität: 12.03.2014 DE 102014204603
(71) Anmelder: Deere & Company, Moline, IL 61265 (US)
(72) Erfinder: Dima, Cristian, 66386 St. Ingbert / Rohrbach (DE)
(74) Vertreter: Holst, Sönke

(57) **Zusammenfassung**

Eine Anordnung und ein Verfahren zur Erkennung und Dokumentation der Qualität von Stroh, mit folgenden Schritten:
Aufnehmen eines Bildes eines Strohschwads (20) mit einer Kamera (26, 26'),
Erzeugen eines Signals hinsichtlich der Qualität des Strohs durch ein Bildverarbeitungssystem (36) anhand aus dem Bild der Kamera (26, 26') abgeleiteter Größen, und
Abspeichern und/oder Anzeigen des Signals des Bildverarbeitungssystems (36) und/oder Kontrollieren eines Aktors basierend auf dem Signal des Bildverarbeitungssystems (36).

## Beschreibung

Die Erfindung betrifft eine Anordnung und Verfahren zur Erkennung und Dokumentation der Qualität von Stroh.

### Technologischer Hintergrund

Bei der Ernte von Getreide (Weizen, Gerste, etc.) mit einem Mähdrescher wird das vom Korn befreite Stroh üblicherweise an der Rückseite des Mähdreschers auf das Feld ausgetragen, entweder als Schwad, um es später mit einer Ballenpresse zur weiteren Verarbeitung aufzunehmen, oder in gehäckselter Form über die Schnittbreite verteilt. Falls das Stroh weiterverarbeitet werden soll, hängt es außer von Eigenschaften der Getreidepflanzen von der Bauart des Mähdreschers und dessen Einstellung ab, in welchem Maße das Stroh beim Dresch- und Trennvorgang im Mähdrescher beschädigt wird. So kann ein zu kleiner Dreschspalt zu größeren Anteilen an Bruchstroh führen als ein größerer Dreschspalt.

Die Qualität des Strohs spielt bei der weiteren Verwendung in vielen Fällen eine große Rolle, denn stark beschädigtes Stroh kann beispielsweise kaum noch als Dämmmaterial für Bauwerke oder ähnliche Aufgaben verwendet werden. Es wäre daher wünschenswert, die Qualität des Strohs durch selbsttätige und objektiver als ein menschlicher Beurteiler arbeitende Mittel zu erkennen.

Zu diesem Zweck wurde vorgeschlagen, das Strohschwad vor einem Traktor mittels eines LiDaR-Sensors, d.h. einem das Schwad in Querrichtung abtastenden Laserstrahl-Entfernungsmesser abzutasten, um die durchschnittliche Höhe des Schwads und deren Standardabweichung zu evaluieren, wobei davon ausgegangen wird, dass beschädigtes Stroh ein kompakteres Schwad bildet als unbeschädigtes Stroh (B. Lenaerts et al., LiDaR sensing to monitor straw output quality of a combine harvester, Computers and Electronics in Agriculture 83 (2012), 40-44). Man leitet demnach die Strohqualität direkt aus der Schwadhöhe ab, was beispielsweise bei lokal geringeren Durchsätzen zu Fehlbeurteilungen führt.

Im Stand der Technik wurde weiterhin vorgeschlagen, am Mähdrescher eine rückwärtige Kamera anzubringen, damit der Bediener von seinem Arbeitsplatz aus mittels eines mit der Kamera verbundenen Monitors überwachen kann, ob die Erntegutreste korrekt ausgetragen werden (JP 2005 137 260 A, JP 2008 182 938 A). Die US 6 119 442 A zeigt eine Kamera am Strohauslass eines Axialtrennrotors, die dazu dient, im Stroh enthaltene Verlustkörner nachzuweisen. Eine Überwachung oder gar selbsttätige Erkennung der Strohqualität ist bei keiner dieser Mähdrescher vorgesehen.

### Aufgabe

Die vorliegende Erfindung hat sich zur Aufgabe gesetzt, eine gegenüber dem Stand der Technik verbesserte und insbesondere genauer arbeitende Anordnung zur Erkennung und Dokumentation der Qualität von Stroh und ein entsprechendes Verfahren bereitzustellen.

### Erfindung

Die vorliegende Erfindung wird durch die Patentansprüche definiert.

Eine Anordnung zur Erkennung und Dokumentation der Qualität von Stroh umfasst eine Kamera, deren Blickfeld auf ein Strohschwad gerichtet oder ausrichtbar ist und die betreibbar ist, mindestens ein Bild des Strohschwads aufzunehmen, das hinreichende Details enthält, einzelne Strohpartikel zu identifizieren, ein mit der Kamera signalübertragend verbundenes Bildverarbeitungssystem, das betreibbar ist, anhand aus dem Bild der Kamera abgeleiteter Größen ein Signal hinsichtlich der Qualität des Strohs zu erzeugen, und eine Speicher- und/oder Anzeigen- und/oder Kontrolleinheit, die zum Abspeichern und/oder Anzeigen des Signals des Bildverarbeitungssystems und/oder zum Kontrollieren eines Aktors basierend auf dem Signals des Bildverarbeitungssystems dient.

Mit anderen Worten wird eine Anordnung bereitgestellt, die Bilddaten verwendet, um Strohqualitätsmessungen durchzuführen. Die Anordnung umfasst eine Kamera zur Erzeugung von Bilddateien des Strohschwads und ein Bildverarbeitungssystem mit Software, um aus den Bilddateien der Kamera die Qualität des Strohs abzuleiten. Diese Anordnung kann als Handgerät (z.B. in Form eines Smartphones oder Tablet-Computers) durch einen Bediener über ein Feld getragen werden, um das Strohschwad zu bewerten, oder sie kann an einer Ballenpresse oder einem diese ziehenden Traktor befestigt werden, um den entstehenden Ballen die ermittelte Strohqualität zuzuordnen, wozu ein am Ballen befestigten Datenträger und/oder eine bei der Arbeit erzeugte Karte mit der Position des Ballens und der Qualität verwendet werden kann. Es wäre auch denkbar, die Anordnung direkt am Mähdrescher anzubringen, vorzugsweise in einer vor Staub geschützten Umgebung, oder dass der Bediener des Mähdreschers oder eine andere Person von Zeit zu Zeit während der Ernte ein Bild des Strohschwads aufnimmt und an eine Kontrolleinheit des Mähdreschers übersendet, damit dieser seine Einstellung (insbesondere Dreschtrommel- oder Rotorgeschwindigkeit und/oder Dreschspalt) verbessern kann. Hierzu sei auf die Vorgehensweise nach DE 10 2012 223 434 A1 und B. Lenaerts et al. (a.a.O.) verwiesen, deren Offenbarungen durch Verweis mit in die vorliegenden Unterlagen aufgenommen werden. Diese Datenerfassung kann auch durch den erwähnten, die Ballenpresse ziehenden Traktor erfolgen.

Die von der Anordnung bereitgestellte Information kann dazu dienen, den Wert des Strohs, d.h. den Verkaufspreis, festzustellen. Sie kann auch genutzt werden, um Einstellungen des Mähdreschers, der das Strohschwad erzeugt hat, zu bewerten und bei Bedarf möglichst noch während des laufenden Erntevorgangs zu verändern, um (neben andern Betriebsparametern, wie Durchsatz, Kornqualität und Kornverlusten) die Strohqualität zu verbessern.

Bei einer vorteilhaften Ausführungsform identifiziert das Bildverarbeitungssystem in dem Bild der Kamera enthaltene Strohpartikel, evaluiert eine oder mehrere Eigenschaften der identifizierten Strohpartikel und erzeugt anhand der evaluierten Eigenschaft oder Eigenschaften der identifizierten Strohpartikel das Signal hinsichtlich der Qualität des Strohs.

Die durch das Bildverarbeitungssystem evaluierte Eigenschaft kann die Länge der Strohpartikel und/oder die Anzahl von Knicken der Strohpartikel und/oder Ausfransungen und/oder die Farbe der Strohpartikel und/oder Farbunterschiede innerhalb von Strohpartikeln und/oder ein Abweichen von einer normalen Form der Strohpartikel sein. Da jedes Bild mehrere Strohpartikel enthält, können statistische Informationen aus den erwähnten Eigenschaften abgeleitet werden, z.B. Histogramme oder Mittelwerte und Standardabweichungen.

Die Identifikation der Strohpartikel innerhalb des Bildes erfolgt durch das Bildverarbeitungssystem insbesondere anhand von Kanten und/oder anhand lokaler Eigenschaften des Bildes, wie Farbe und/oder Textur, wobei vorzugsweise Überdeckungen von Strohpartikeln durch andere Strohpartikel und/oder Kaff berücksichtigt werden.

Bei einer anderen Ausführungsform bestimmt das Bildverarbeitungssystem das Signal hinsichtlich der Qualität des Strohs anhand einer evaluierten statistischen Verteilung des Frequenzinhalts im Bild und/oder der Länge zumindest näherungsweise gerader Kanten im Bild und/oder anhand des Anteils von texturarmen Zonen im Bild.

Dem Bildverarbeitungssystem kann zweckmäßigerweise eine Information hinsichtlich des Abbildungsverhältnisses der Kamera vorliegen, insbesondere in Form von Daten hinsichtlich der Brennweite und/oder des Bildwinkels und des Abstands des Strohschwads von der Kamera und/oder anhand eines im Bild enthaltenen Referenzmerkmals.

Das Bildverarbeitungssystem kann mit einer Schnittstelle verbunden werden, mittels derer ein Bediener eine Einschätzung der Strohqualität eingeben kann, und die eingegebene Einschätzung gemeinsam mit dem vom Bildverarbeitungssystem erzeugten Signal hinsichtlich der Strohqualität abspeichern, bzw. anhand der eingegebenen Einschätzung die evaluierte Strohqualität an die Einschätzung anzupassen.

Das Bildverarbeitungssystem ist vorzugsweise mit einer Positionsbestimmungseinrichtung verbunden und speichert das Signal hinsichtlich der Strohqualität georeferenziert ab.

Die Kamera und das Bildverarbeitungssystem werden insbesondere an einem Fahrzeug, z.B. einem Traktor angebracht. Das Bildverarbeitungssystem kann anhand des Bildes die Lage des Schwads in dem Bild identifizieren und einem Lenksystem zuführen.

### Ausführungsbeispiel

In den Zeichnungen ist ein nachfolgend näher beschriebenes Ausführungsbeispiel der Erfindung dargestellt, wobei die Bezugszeichen nicht zu einer einschränkenden Auslegung der Patentansprüche herangezogen werden dürfen. Es zeigt:
- Fig. 1: eine seitliche Ansicht eines Traktors mit einer Ballenpresse sowie einer Anordnung zur Bestimmung der Strohqualität,
- Fig. 2: eine schematische Darstellung der Anordnung zur Bestimmung der Strohqualität,
- Fig. 3: ein Flussdiagramm, nach dem die Anordnung zur Bestimmung der Strohqualität arbeitet, und
- Fig. 4: ein typisches, von der Anordnung zur Bestimmung der Strohqualität aufgenommenes Bild eines Teilbereichs eines Strohschwads, wobei die im Bild identifizierten Kanten kenntlich gemacht sind.

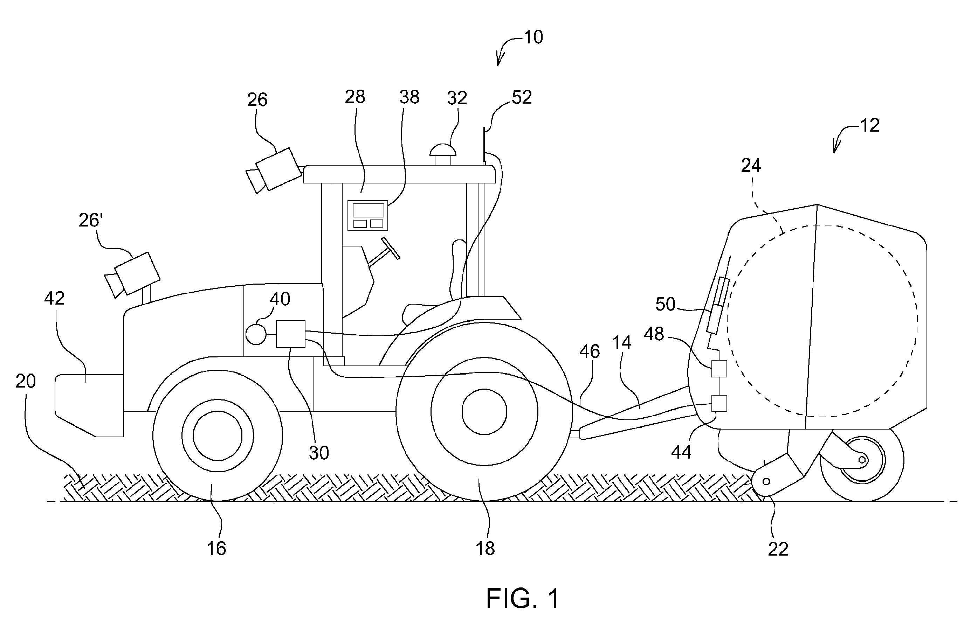

Die Figur 1 zeigt eine Kombination aus einem Traktor 10 und einer durch eine Deichsel 14 damit gekoppelte Ballenpresse 12. Der Traktor 10 weist vordere lenkbare Räder 16 und rückwärtige angetriebene Räder 18 auf. Er zieht hinter sich die Ballenpresse 12 her, die das Erntegut aus einem Strohschwad 20 mittels eines Aufnehmers 22 vom Feld aufnimmt und zu Ballen 24 formt. Anstelle der dargestellten Rundballenpresse kann die Ballenpresse 12 auch eine Rechteckballenpresse sein. Sie könnte auch selbstfahrend ausgeführt sein.

Eine Kamera 26 ist an der Oberseite der in Fahrtrichtung vorlaufenden Seite der Fahrerkabine 28 des Traktors 10 angebracht. Sie befindet sich auf der Längsmittelebene des Traktors 10 und ihr Objektiv ist nach vorn und unten auf das Schwad 20 gerichtet. Eine andere mögliche Anbringung der Kamera 26' wäre an der Frontseite der Motorhaube des Traktors 10 oder auf einem Frontgewicht 42. Die Kamera 26 bzw. 26' kann auf der Längsmittelebene des Traktors 10 befestigt sein oder ihr gegenüber seitlich versetzt.

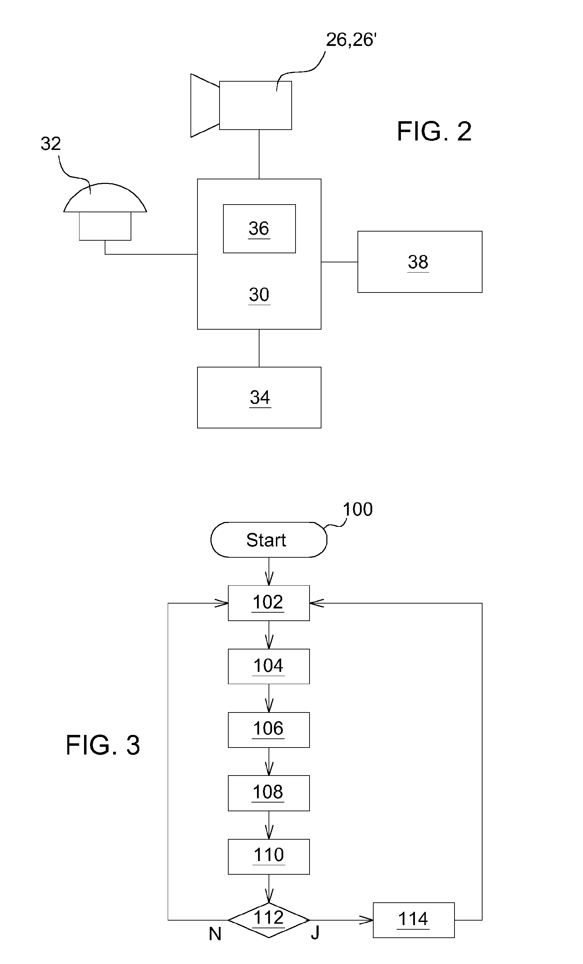

Die Figur 2 zeigt schematisch eine Anordnung, mit welcher die Strohqualität des Strohschwads 20 selbsttätig evaluiert wird. Die Kamera 26 oder 26' ist bilddatenübertragend mit einer elektronischen Verarbeitungseinheit 30 verbunden, die ein Bildverarbeitungssystem 36 enthält. Die Verarbeitungseinheit 30 kann weiterhin mit einer Positionsbestimmungseinrichtung 32 in Form einer Antenne zum Empfang von Signalen eines satellitengestützten Positionsbestimmungssystems (z.B. GPS, Glonass oder Galileo), einer Bedienerschnittstelle 38 und einer Speichereinrichtung 34 verbunden sein. Weiterhin kann die Verarbeitungseinheit 30 über einen Fahrzeugbus 46 mit einer Kontrolleinheit 44 der Ballenpresse 12 verbunden werden, welche über eine Ventileinheit 48 einen Aktor 50 zur Verstellung des Drucks der Pressmittels der Ballenpresse 12 ansteuert. Außerdem kann die Verarbeitungseinheit 30 mit einer Kommunikationseinheit 52 verbunden sein, um Daten an eine beabstandete Stelle zu senden, z.B. einen Mähdrescher (nicht gezeigt), der vor der Ballenpresse 12 über das Feld fährt und es aberntet.

Eine mögliche Arbeitsweise der Anordnung ergibt sich aus der Figur 3, in der ein Flussdiagramm gezeigt ist, nach dem die Anordnung arbeiten kann. Nach dem Start im Schritt 100 wird, während der laufenden Strohernte im Schritt 102 ein Bild des Schwads 20 aufgenommen, das hinreichend scharf und detailliert ist, um einzelne Strohpartikel erkennen zu können. Im Schritt 104 wird das Bild dann durch das Bildverarbeitungssystem 36 segmentiert, um einzelne Strohpartikel zu identifizieren. Zuvor kann noch eine Vorbearbeitung erfolgen, z.B. zur Erhöhung der Kantenkontraste.

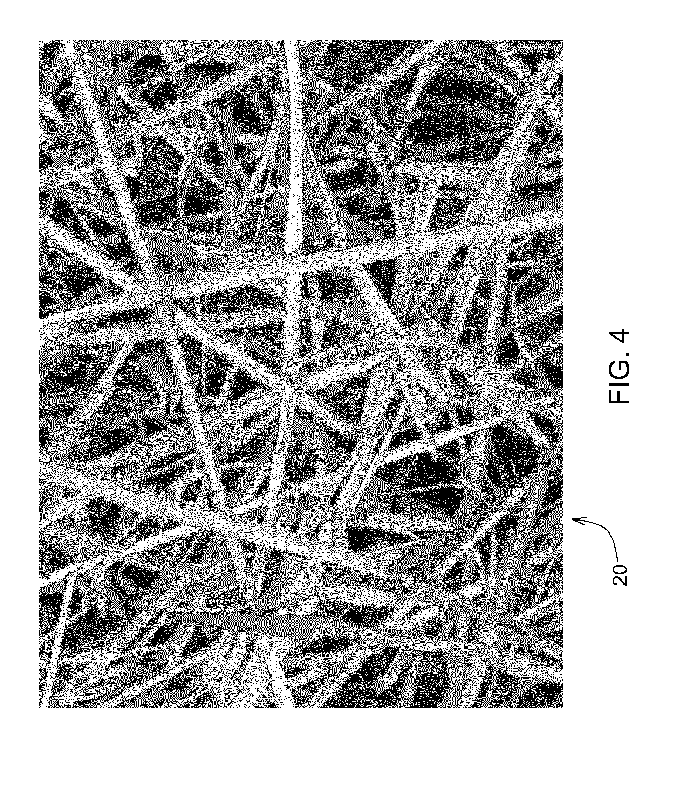

Hierzu können beispielsweise zunächst Kanten im Bild identifiziert werden, d.h. zusammenhängende Bildpunkte, die an Stellen sitzen, an denen sich die Helligkeit und/oder Farbe des Bildes relativ sprunghaft ändert oder ändern. Hierzu sei auf die Figur 4 verwiesen, die einen Ausschnitt aus einem typischen Bild der Kamera 26 oder 26' zeigt, in dem identifizierte Kanten von Strohpartikeln dunkel hervorgehoben sind. Alternativ oder zusätzlich werden lokale Eigenschaften des Bildes, wie Farbe und/oder Textur, identifiziert. So können Bildpunkte einer bestimmten Farbe (gelblich bis braun) dem Stroh zugeordnet werden, während Bildpunkte anderer Farbe als Hintergrund angesehen werden. Auch die Textur im Bild kann zur Unterscheidung zwischen Stroh und Hintergrund dienen, denn die Strohpartikel sind relativ länglich und in der Regel mit längs verlaufenden Merkmalen (Rillen o.ä.) versehen, während der Hintergrund und andere Partikel andere Texturen aufweisen. Hierzu sei auf die DE 103 51 861 A1 verwiesen, deren Offenbarung durch Verweis mit in die vorliegenden Unterlagen aufgenommen wird. Bei dieser Segmentierung werden vorzugsweise (die in der Figur 4 gut erkennbaren) Überdeckungen von Strohpartikeln durch andere Strohpartikel und/oder Kaff berücksichtigt, insbesondere indem überdeckte Bereiche ignoriert bzw. zwei benachbarten Strohpartikeln zugeordnet werden.

Am Ende des Schritts 104 sind somit die Strohpartikel im Bild identifiziert worden, d.h. die Lage von Strohteilchen zuordenbaren Bildelementen. Es folgt dann der Schritt 106, in welchem das Bildverarbeitungssystem 36 für die Strohqualität bedeutsame Eigenschaften der identifizierten Strohpartikel evaluiert. Derartige Eigenschaften können beispielsweise die Länge der Strohpartikel und/oder Ausfransungen von Strohpartikeln und/oder die Anzahl von Knicken der Strohpartikel und/oder die Farbe der Strohpartikel und/oder Farbunterschiede innerhalb von Strohpartikeln und/oder ein Abweichen von einer normalen Form der Strohpartikel sein. Die Länge der Strohpartikel entspricht ihrer längsten Abmessung. Knicke können durch einen Schwellwert übersteigende Winkel in den Kanten der Stroh partikel identifiziert werden. Die Farbe oder lokale Farbunterschiede der Strohpartikel können, wie Ausfransungen, auf Bruchstellen hinweisen, und eine von einer normalen (langgestreckt rechteckigen) Form abweichende, identifizierte Strohpartikel deuten in der Regel ebenfalls auf Strohbruch hin. In diesem Schritt können direkt eine oder mehrere der erwähnten Eigenschaften ermittelt werden, oder daraus abgeleitete Informationen, wie Histogramme oder Mittelwerte und Standardabweichungen oder aus mehreren Eigenschaften abgeleitete Daten.

Im Schritt 104 können zusätzlich Kaff oder andere Partikel, insbesondere Verlustkörner, identifiziert werden. Diese Information kann zur Evaluierung der Qualität der Arbeit des Mähdreschers genutzt werden.

Im folgenden Schritt 108 werden dann die im Schritt 106 evaluierten Eigenschaften für das gesamte Bild kombiniert, um ein Signal hinsichtlich der Qualität des Strohs (d.h. einen Qualitätsparameter) zu bestimmen. Hierzu können beliebige statistische Verfahren Verwendung finden, wie Bestimmung eines Durchschnittswerts und eine Standardabweichung (und/oder andere Funktionen oder beschreibende Statistiken) einer oder mehrerer Eigenschaften der Stroh partikel. Die unterschiedlichen Eigenschaften können mit verschiedenen Wichtungen in das Signal hinsichtlich der Qualität des Strohs eingehen. Am Ende des Schritts 108 liegt somit ein Signal hinsichtlich der Qualität des Strohs vor. Das besagte Signal kann beispielsweise die durchschnittliche Länge (und ggf. deren Standardabweichung) der Strohpartikel angeben oder ein beliebiges, aus mehreren im Schritt 106 evaluierten Eigenschaften abgeleitetes Maß, das z.B. einer Zensurenskala (1 bis 6 o.ä.) folgen kann, oder den finanziellen Wert des Strohs angeben.

Die Ableitung des besagten Signals aus der oder den Eigenschaften kann fest vorgegeben sein oder ganz oder teilweise auf Eingaben des Bedieners in die Schnittstelle 38 beruhen. So kann er eingeben, ob ihm die Stroh länge oder eine andere Eigenschaft besonders wichtig ist, und/oder er kann auch den Zusammenhang zwischen der Eigenschaft und dem Signal vorgeben, um beispielsweise der zu erwartenden, von der Art des Getreides und Eigenschaften des Feldes abhängige Strohlänge Rechnung zu tragen. Auf diese Weise kann berücksichtigt werden, dass unterschiedliche Verwendungszwecke des Strohs unterschiedliche Eigenschaften verlangen und dass unterschiedliche Landwirte auch unterschiedliche Vorstellungen von der Bewertung des Strohs haben. Diese Eingabe muss nicht während der Arbeit erfolgen, sondern kann bei der Installation oder ersten Inbetriebnahme des Systems erfolgen, sei es über die Schnittstelle 38 oder über eine andere Schnittstelle, z.B. ein Smartphone oder einen Bürocomputer, und eine Datenfernübertragung. Wie unten erwähnt, kann die Ableitung des besagten Signals aus der oder den Eigenschaften auch selbsttätig durch das System erfolgen.

Um im Schritt 106 und/oder 108 die konkrete Länge der Strohpartikel bestimmen zu können, benötigt das Bildverarbeitungssystem 36 eine Information hinsichtlich des Abbildungsverhältnisses der Kamera 26 oder 26', d.h. Daten bezüglich der absoluten Länge der einzelnen Bildelemente. Diese Information kann dem Bildverarbeitungssystem 36 in Form von Daten hinsichtlich der Brennweite und/oder Bildwinkel des Objektivs der Kamera 26 oder 26' und des Abstands des Strohschwads 20 von der Kamera 26 oder 26 zugeführt werden. Alternativ oder zusätzlich kann das Bildverarbeitungssystem 36 das Abbildungsverhältnis anhand eines im Bild enthaltenen Referenzmerkmals evaluieren, z.B. anhand eines von der Kamera 26' mit im Bild aufgenommenen Frontgewichts 42 oder der von der Kamera 26 mit aufgenommenen Motorhaube.

Anschließend folgt der Schritt 110, in dem das Signal hinsichtlich der Qualität des Strohs in der Speichereinrichtung 34 abgelegt und/oder auf einer Anzeigeeinrichtung der Bedienerschnittstelle 38 angezeigt wird. Es folgt der Schritt 112, in dem abgefragt wird, ob gerade ein Ballen 24 fertiggestellt wurde bzw. kurz vor der Fertigstellung steht. Ist das nicht der Fall, folgt wieder der Schritt 102, d.h. es wird der Vorgang von neuem durchlaufen und ein neues Bild des Strohschwads 20 aufgenommen und evaluiert. Anderenfalls folgt der Schritt 114, in dem ein durchschnittliches Signal hinsichtlich der Qualität des Strohs für den Ballen (d.h. die Signale hinsichtlich der Qualität des Strohs, die den der bei der Erstellung des jeweiligen Ballens 24 aufgenommenen und evaluierten Bildern zuzuordnen sind, werden berücksichtigt) mit der jeweiligen Position in der Speichereinrichtung 34 abgespeichert werden. Diese Daten können auch auf einem Transponder-Chip abgespeichert werden, der am oder im jeweiligen Ballen befestigt wird. Den einzelnen Ballen sind somit ihre Strohqualitäten eindeutig zugeordnet. Es folgt dann ebenfalls der Schritt 102.

Im Schritt 114 kann der Bediener über die Schnittstelle 38 eine Bewertung der Strohqualität eingeben, die für den jeweiligen Ballen 24 mit in der Speichereinrichtung 34 abgelegt wird. Die Bildverarbeitungseinrichtung 36 kann auch einen Zusammenhang zwischen der Bewertung des Bedieners und dem zugehörigen Signal hinsichtlich der Qualität des Strohs bestimmen, sei es um eine Lernfähigkeit des Bildverarbeitungssystems 36 zu ermöglichen (indem es den Zusammenhang zwischen dem Signal und der Bedienereingabe erkennt und zur nunmehr an die Bedienereingabe angepassten Auswertung späterer Signale nutzt) oder um mögliche Fehler des Bildverarbeitungssystems 36 feststellen zu können. Auch auf diese Weise kann berücksichtigt werden, dass unterschiedliche Verwendungszwecke des Strohs unterschiedliche Eigenschaften verlangen und dass unterschiedliche Landwirte auch unterschiedliche Vorstellungen von der Bewertung des Strohs haben. Diese Bewertung kann auch schon im Voraus eingegeben werden, z.B. bei einer Begehung des Felds und über eine beliebige, andere Schnittstelle eingegeben und an die Bildverarbeitungseinrichtung übersandt werden.

Die Signale hinsichtlich der Qualität des Strohs können durch die Verarbeitungseinheit 30 über den Fahrzeugbus 46 an die Kontrolleinheit 44 der Ballenpresse 12 übersandt werden, die beispielsweise über die Ventileinheit 48 und den Aktor 50 anhand der Länge des Strohs die Presskraft der Ballenpresse 12 kontrolliert, um kurzes Stroh mit weniger Druck als langes Stroh zu pressen. Die Signale hinsichtlich der Qualität des Strohs können auch über die Kommunikationseinheit 52 an einen Mähdrescher übersandt werden, der selbsttätig oder durch Fahrereingabe noch während der Ernte seine Drescheinstellung modifizieren kann, um die Strohqualität zu verbessern.

Es sei angemerkt, dass bei einer anderen Ausführungsform die Vorgehensweise des Bildverarbeitungssystems etwas vereinfacht werden kann, indem es das Signal hinsichtlich der Qualität des Strohs anhand einer evaluierten statistischen Verteilung des Frequenzinhalts im Bild evaluiert. Es wird mit anderen Worten eine Fouriertransformation des Bildes auf hochfrequente Komponenten hin untersucht. Der Anteil der hochfrequenten Komponenten deutet auf viele einzelne Details im Bild hin, was wiederum auf einen hohen Anteil an Bruchstroh hinweist. Alternativ oder zusätzlich kann das Signal anhand der Länge zumindest näherungsweise gerader Kanten im Bild und/oder anhand des Anteils von texturarmen Zonen im Bild evaluiert werden. Die Länge der geraden Kanten, die im Allgemeinen auf Strohpartikel zurückzuführen ist, deutet auf die Länge der Strohpartikel hin. Der Anteil texturarmer Zonen lässt sich ebenfalls auf Strohpartikel zurückführen. Demnach bilden auch diese, relativ einfach und schnell evaluierbaren Größen ein Maß für die Qualität des Strohs.

Weiterhin besteht die Möglichkeit, die Signale der Kamera 26 oder 26' auch zur Erzeugung eines Lenksignals für ein Lenksystem 40 des Traktors 10 zu verwenden, indem die Lage des Schwads identifiziert und zur Erzeugung des Lenksignals genutzt wird. Hierzu sei noch einmal auf die Offenbarung der DE 103 51 861 A1 verwiesen.

### Schritte der Figur 3

- 100: Start
- 102: Bild des Schwads aufnehmen
- 104: Segmentieren des Bildes, Identifizieren von Strohpartikeln
- 106: eine oder mehrere Eigenschaften der identifizierten Strohpartikel evaluieren
- 108: Signal hinsichtlich der Qualität des Strohs für das Bild bestimmen
- 110: Signal hinsichtlich der Qualität des Strohs anzeigen und/oder abspeichern
- 112: Ballen fertig?
- 114: durchschnittliches Signal für den Ballen mit Position abspeichern

## Patentansprüche

1. Anordnung zur Erkennung und Dokumentation der Qualität von Stroh, umfassend:
eine Kamera (26, 26'), deren Blickfeld auf ein Strohschwad (20) gerichtet oder ausrichtbar ist und die betreibbar ist, ein Bild des Strohschwads (20) aufzunehmen,
ein mit der Kamera (26, 26') signalübertragend verbundenes Bildverarbeitungssystem (36), das betreibbar ist, anhand aus dem Bild der Kamera (26, 26') abgeleiteter Größen ein Signal hinsichtlich der Qualität des Strohs zu erzeugen, und
eine Speicher- und/oder Anzeigen- und/oder Kontrolleinheit (34, 38) zum Abspeichern und/oder Anzeigen des Signals des Bildverarbeitungssystems (36) und/oder zum Kontrollieren eines Aktors basierend auf dem Signal des Bildverarbeitungssystems (36).

2. Anordnung nach Anspruch 1, wobei das Bildverarbeitungssystem (38) betreibbar ist, in dem Bild der Kamera (26, 26') enthaltene Strohpartikel zu identifizieren, eine oder mehrere Eigenschaften der identifizierten Strohpartikel zu evaluieren und anhand der Eigenschaften der identifizierten Strohpartikel das Signal hinsichtlich der Qualität des Strohs zu erzeugen.

3. Anordnung nach Anspruch 2, wobei die durch das Bildverarbeitungssystem (36) evaluierte Eigenschaft die Länge der Strohpartikel und/oder die Anzahl von Knicken der Strohpartikel und/oder Ausfransungen und/oder die Farbe der Strohpartikel und/oder Farbunterschiede innerhalb von Strohpartikeln und/oder ein Abweichen von einer normalen Form der Strohpartikel ist.

4. Anordnung nach Anspruch 2 oder 3, wobei das Bildverarbeitungssystem (36) betreibbar ist, Strohpartikel innerhalb des Bildes anhand von Kanten und/oder anhand lokaler Eigenschaften des Bildes, wie Farbe und/oder Textur, zu identifizieren, wobei es vorzugsweise Überdeckungen von Strohpartikeln durch andere Strohpartikel und/oder Kaff berücksichtigt.

5. Anordnung nach einem der vorhergehenden Ansprüche, wobei das Bildverarbeitungssystem (36) betreibbar ist, das Signal hinsichtlich der Qualität des Strohs anhand einer evaluierten statistischen Verteilung des Frequenzinhalts im Bild und/oder der Länge zumindest näherungsweise gerader Kanten im Bild und/oder anhand des Anteils von texturarmen Zonen im Bild zu evaluieren.

6. Anordnung nach einem der vorhergehenden Ansprüche, wobei dem Bildverarbeitungssystem (36) eine Information hinsichtlich des Abbildungsverhältnisses der Kamera (26, 26') vorliegt, insbesondere in Form von Daten hinsichtlich des Bildwinkels und/oder der Brennweite der Kamera (26, 26') und des Abstands des Strohschwads (20) von der Kamera (26 26') und/oder anhand eines im Bild enthaltenen Referenzmerkmals.

7. Anordnung nach einem der vorhergehenden Ansprüche, wobei das Bildverarbeitungssystem (36) mit einer Schnittstelle (38), mittels derer ein Bediener eine Einschätzung der Strohqualität eingeben kann, verbunden und betreibbar ist, die eingegebene Einschätzung gemeinsam mit dem vom Bildverarbeitungssystem (36) erzeugten Signal hinsichtlich der Strohqualität abzuspeichern und/oder anhand der eingegebenen Einschätzung die evaluierte Strohqualität an die Einschätzung anzupassen.

8. Anordnung nach einem der vorhergehenden Ansprüche, wobei das Bildverarbeitungssystem (38) mit einer Positionsbestimmungseinrichtung (32) verbunden und betreibbar ist, das Signal hinsichtlich der Strohqualität georeferenziert abzuspeichern.

9. Anordnung nach einem der vorhergehenden Ansprüche, wobei die Kamera (26, 26') und das Bildverarbeitungssystem (36) an einem Fahrzeug, insbesondere einem Traktor (10), angebracht sind und das Bildverarbeitungssystem (36) insbesondere betreibbar ist, die Lage des Schwads (20) in dem Bild zu identifizieren und einem Lenksystem (40) des Traktors (10) zuzuführen.

10. Verfahren zur Erkennung und Dokumentation der Qualität von Stroh, mit folgenden Schritten:
Aufnehmen eines Bildes eines Strohschwads (20) mit einer Kamera (26, 26'),
Erzeugen eines Signals hinsichtlich der Qualität des Strohs durch ein Bildverarbeitungssystem (36) anhand aus dem Bild der Kamera (26, 26') abgeleiteter Größen, und
Abspeichern und/oder Anzeigen des Signals des Bildverarbeitungssystems (36) und/oder Kontrollieren eines Aktors basierend auf dem Signal des Bildverarbeitungssystems (36).
